# EUROPÄISCHE PATENTSCHRIFT

(11) **EP 1 705 390 B1**
(45) Veröffentlichungstag und Bekanntmachung des Hinweises auf die Patenterteilung: **27.11.2013**
(21) Anmeldenummer: 06005691.8
(22) Anmeldetag: 21.03.2006
(51) Int. Cl.: F16C 13/00, D21F 3/02

(54) **Befestigung und Abdichtung eines Walzenmantels mittels Klemmringen an die Randscheiben einer Schuhwalze einer Vorrichtung zum Bilden eines Langspalts**
Mounting and sealing of a roll mantle with clamping rings to the end discs of a shoe roll of a device providing a longitudinal gap
Fixation et étanchéité d'un bandage de cylindre avec des anneaux de serrage sur les disques d'extrémité d'un dispositif de formation d'une fente longitudinale

(30) Priorität: 22.03.2005 DE 102005013024
(43) Veröffentlichungstag der Anmeldung: 27.09.2006
(73) Patentinhaber: Andritz Küsters GmbH, 47805 Krefeld (DE)
(72) Erfinder: Mark, Wolfgang, 40668 Meersbusch (DE); Gross, Ralf, 47918 Tönisvorst (DE); Höhne, Axel, 47447 Moers (DE)
(74) Vertreter: Henseler, Daniela

(56) Entgegenhaltungen:
- EP-A1- 0 442 257
- EP-A1- 1 403 425
- DE-A1- 3 338 487
- DE-A1- 3 501 635
- DE-A1- 10 153 674
- DE-A1- 19 633 543
- DE-U1- 29 702 362

## Beschreibung

Die Erfindung betrifft eine Vorrichtung zum Bilden eines Langspalts zwischen einer rotierenden Gegenwalze und einer Schuhwalze zum Behandeln einer Warenbahn.

Aus DE 33 38 487 A ist eine Vorrichtung zum Bilden eines Pressspalts zwischen einer rotierenden Gegenwalze und einer Schuhwalze zum Behandeln eines leicht deformierbaren Materials bekannt. Die Enden des Walzenmantels sind dichtend mit je einem am Träger drehbar gelagerten runden Deckel (Randscheibe) verbunden. Die Enden des Walzenmantels sind dazu je zwischen zwei aus einem gummi-elastischen Material bestehenden Ringen eingespannt, welche in entspanntem Zustand je einen etwa kreisförmigen Querschnitt aufweisen. Die elastische Ringe sind je in einer im Deckel bzw. in einem als Flanschring ausgebildeten Haltering ausgesparten Umfangsrille angeordnet, welche eine in axialer Richtung des Walzenmantels gegen dessen Mitte hin abnehmende Tiefe aufweist.

Eine weitere Vorrichtung zum Bilden eines Langspalts ist beispielsweise aus DE 297 02 362 U1 bekannt. Danach ist zum Festklemmen des jeweiligen Endabschnitts des Walzenmantels ein Klemmring vorgesehen, der auf einem abschnittsweise zylindrischen Teil der Stirnwand verschiebbar gelagert ist. Der Stirnwand ist ferner ein Außenring zugeordnet, so daß im Umfangsbereich der Stirnwand eine zur gegenüberliegenden anderen Stirnwand hin offene Ringnut gebildet wird, die radial nach innen durch den sich axial ins Walzeninnere erstreckenden zylindrischen Teil der Stirnwand und radial nach außen durch eine Innenumfangsfläche des Außenringes begrenzt wird. Der Klemmring umfaßt einen Keilabschnitt mit einer konischen Außenumfangsfläche, mit der dieser in die Ringnut eingreift. In die Ringnut ist zusätzlich ein elastischer Spreizring eingesetzt, dessen Innenumfangsfläche eine mit der konischen Außenumfangsfläche des Klemmrings zusammenwirkende konische Gegenfläche bildet. In einer Klemmstellung des Klemmrings, bei der der Spreizring aufgrund eines Wirkeingriffs der Keilflächen radial aufgeweitet ist, wird der Endabschnitt des Walzenmantels dichtend in einem Klemmspalt festgeklemmt, der durch die zylindrische Außenumfangsfläche des Spreizrings und die zylindrische Innenumfangsfläche des Außenrings gebildet wird. Der Walzenmantel wird dadurch gegen die zylindrische Innenfläche des Außenrings gepreßt.

Aus DE 196 33 543 A1 ist eine Preßwalze zur Behandlung einer Materialbahn in einem mit einer Gegenfläche gebildeten Preßspalt bekannt, die einen Walzenmantel, einen diesen Walzenmantel durchsetzenden Träger sowie zwei drehbar am Träger gelagerte Stirnwände umfaßt. An den Stirnwänden sind die beiden Endabschnitte des Walzenmantels dichtend befestigt, wobei wenigstens einer der beiden Endabschnitte an der betreffenden Stirnwand festgeklemmt ist. Zum Festklemmen eines jeweiligen Endabschnitts des Walzenmantels ist wenigstens ein um eine Außenumfangsfläche der Stirnwand geführtes Spannband und/oder ein um die Außenumfangsfläche geführter hochfester Faden vorgesehen, um den Endabschnitt des Walzenmantels gegen diese Außenumfangsfläche der Stirnwand zu pressen und an dieser festzuhalten.

Als nachteilig erwiesen hat sich jedoch, daß die Dichtwirkung in der Klemmstellung nicht hinreichend gut ist.

Aufgabe der Erfindung ist es daher, eine Vorrichtung zum Bilden eines Langspalts zu schaffen, bei der die Befestigung des jeweiligen Endabschnitts des Walzenmantels eine zuverlässige Abdichtung gewährleistet.

Diese Aufgabe wird durch die Merkmale des Anspruchs 1 gelöst.

Hierdurch wird eine Vorrichtung zum Bilden eines Langspalts geschaffen, bei der der Klemmeingriff und der Dichtungseingriff funktionell getrennt sind. Beim Anziehen des Klemmrings wird dabei aber gleichzeitig der Eingriff mit einem Dichtring erreicht. Die Ausbildung des Klemmrings als Flanschring hat zudem einen definierten Abstand für den Dichtungseingriff beim Anziehen von Flanschschrauben zur Folge. Die Dichtwirkung in der Klemmstellung über ein eigenständiges Dichtsegment ist dadurch deutlich verbessert.

Weitere Vorteile und Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.

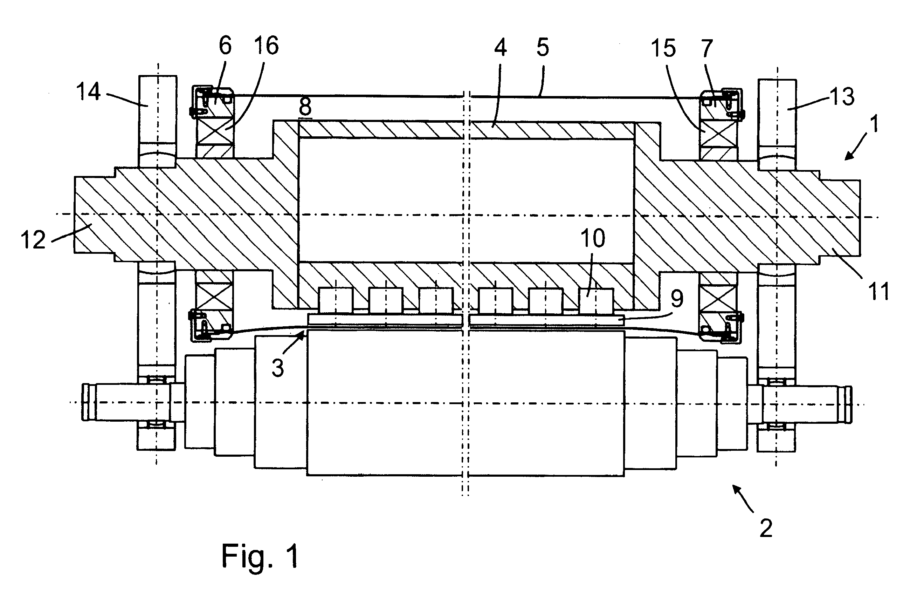

Fig. 1 zeigt schematisch und teilweise geschnitten eine Seitenansicht einer Vorrichtung zum Bilden eines Langspalts,
Fig. 2 zeigt schematisch einen Teilschnitt durch ein Ende einer Vorrichtung zum Bilden eines Langspalts mit einem Klemmring in Eingriffsstellung,
Fig. 3 zeigt schematisch einen anderen Teilschnitt durch ein Ende einer Vorrichtung zum Bilden eines Langspalts mit dem Klemmring in Eingriffsstellung.

Die Erfindung betrifft eine Vorrichtung zum Bilden eines Langspalts zwischen einer Schuhwalze 1 und einer angetriebenen Gegenwalze 2, die in einem Langspalt 3 zusammenwirken zum Behandeln einer Warenbahn, insbesondere einer Papier- oder Kartonbahn, wobei die Vorrichtung Teil einer Papier- oder Kartonherstellungsanlage sein kann.

Die Schuhwalze 1 umfaßt einen feststehenden Träger 4 und einen um den Träger 4 drehbaren Walzenmantel 5, der aus einem flexiblen Material, z. B. Gummi oder Kunststoff, besteht. Der Walzenmantel 5 ist schlauchförmig ausgebildet und mit seinen stirnseitigen Enden an drehbar auf dem Träger 4 sitzenden Randscheiben 6, 7 befestigt, um eine geschlossene Schuhwalze 1 zu bilden. Einem Zwischenraum 8 zwischen Träger 4 und Walzenmantel 5 wird vorzugsweise Druckluft zugeführt, um der Schuhwalze 1 eine zylindrische Form zu geben.

An dem Träger 4 ist ein Druckschuh 9 vorgesehen, der zusammen mit der Gegenwalze 2 den Langspalt 3 begrenzt. Der Druckschuh 9 ist über eine Stützleiste aus einer Mehrzahl axial beabstandeter zueinander angeordneter hydraulischer Stützelemente 10 am Träger 4 abgestützt.

Der Träger 4 besitzt Walzenzapfen 11, 12, die in einem Maschinengestell 13, 14 gelagert sind. Die drehbaren Randscheiben 6, 7 ruhen über Wälzlager 15, 16 auf einem Lagerring am Träger 4. Die Befestigung des Walzenmantels 5 an diesen Randscheiben 6, 7 ist gemäß der vorliegenden Erfindung wie folgt ausgebildet.

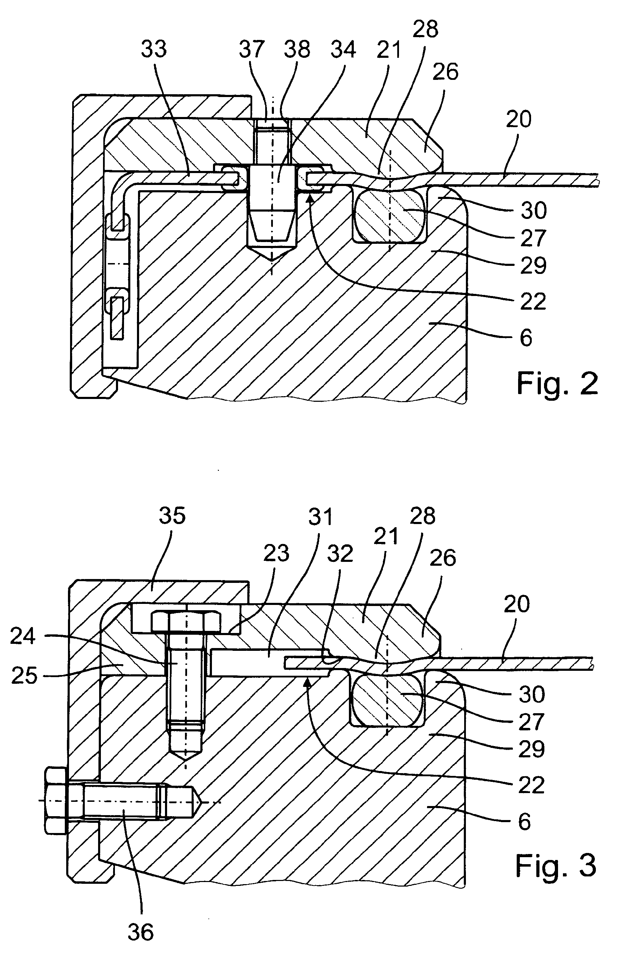

Die Randscheiben 6, 7 sind Stirnwände, von denen in den Figuren 2 und 3 nur eine teilweise dargestellt ist. Die andere, nicht dargestellte Randscheibe ist spiegelsymmetrisch zum Druckschuh 9 ausgebildet. An diesen Randscheiben 6, 7 sind die beiden Endabschnitte 20 des Walzenmantels 5 luft- und öldicht befestigt. Hierzu sind die Endabschnitte 20 an der zugehörigen Randscheibe 6, 7 festgeklemmt, wie dies nachstehend unter Bezugnahme auf die Figuren 2 und 3 erläutert wird.

Zur Befestigung des jeweiligen Endabschnitts 20 des Walzenmantels 5 ist ein Flanschring 21 vorgesehen, der als Klemmring radial anziehbar und gegen eine kopfseitige Stirnfläche 22 der Randscheibe 6 klemmbar ist. Der Flanschring 21 weist auf einer Breite einen Stützsteg 25 auf, mit dem sich der Flanschring 21 auf der Randscheibe 6 abstützt. Die kopfseitige Stirnfläche 22 bildet eine Anlagefläche für den Stützsteg 25. Auf der Breite des Stützsteges 25 weist der Flanschring 21 Schraublöcher 23 auf, durch die in die Randscheibe 6 einschraubbare Befestigungsschrauben 24 einsetzbar sind. Eine Mehrzahl Schraublöcher 23 sind umfanglich verteilt angeordnet. Der Stützsteg 25 ist vorzugsweise als ein äußerer Abschnitt des Flanschringes 21 ausgebildet.

Der Flanschring 21 ist auf einer anderen Breite, hier einem inneren Abschnitt, mit einem Überhang 26 ausgebildet, der eine gegen einen Dichtring 27 klemmbare, umlaufende Nase 28 aufweist. Der Dichtring 27 ist in einen Nutring 29 der Randscheibe 6 eingelegt. Der Nutring 29 weist einen Rand 30 auf, der gegenüber der Stirnfläche 22 radial zur Bildung einer Auflage für das Ende 20 des Walzenmantels 5 vorsteht, die gegenüber der Stirnfläche 22 erhöht ist. Die Nase 28 bewirkt einen Dichteingriff mit dem Dichtring 27 unter Ausbildung einer Tasche 31, in der der Endabschnitt 20 des Walzenmantels 5 frei liegend endet. Für eine Unterstützung des Eingriffs der Nase 28 mit dem Dichtring 27 kann dem Rand 30 an der Randscheibe 6 ein Rand 32 an der Nase 28 zugeordnet sein, wodurch die Auflagefläche im Bereich des Dichtungseingriffs erhöht wird.

Der Flanschring 21 besitzt vorzugsweise einen plattförmigen Rücken, von dem sich der Stützsteg 25 mit einem größeren radialen Fortsatz erstreckt als die Ringnase 28.

Der Walzenmantel 5 weist an seinen beiden Endabschnitten 20 im allgemeinen einzelne vorspringende Laschen 33 auf, die mittels Positionierstiften 34 an den Randscheiben 6 gehalten werden. Im Bereich der Laschen 33 ist der Stützsteg 25 ausgelassen. Der Stützsteg 25 ist folglich vorzugsweise kein umlaufender Ring, sondern besteht aus Ringsegmenten. Die durch den Stützsteg 25 erreichte Klemmung an die Randscheibe 6 ist hinreichend, den Walzenmantel 5 über seine Endabschnitte 20 in Verbindung mit den Positionsstiften 34 an der Randscheibe 6 zu befestigen. Die Positionierstifte 34 können in den Flanschring 21 einschraubbar sein, um eine definierte Position zur Randscheibe 6 einzunehmen. Hierdurch können die Laschen 33 des Walzenmantels 5 zwischen dem Flanschring 21 und der Stirnfläche 22 geklemmt werden. Der Flanschring 21 besitzt dazu umfänglich verteilt angeordnete Öffnungen 37, die vorzugsweise mit einem Innengewinde 38 versehen sind. Ein mit einem Außengewinde versehener Schaft des Positionierstiftes 34 kann einschraubbar sein.

Die Nase 28 kann neben dem Dichtungseingriff auch eine Klemmfunktion über die gegenüberstehenden Ränder 30, 32 ausüben.

Ein L-förmiger Sicherungsdeckel 35 kann über den Flanschring 21 gesetzt und mittels seitlich angreifender Befestigungsschrauben 36 an der Randscheibe 6 befestigt werden. Der Sicherungsdeckel 35 deckt vorzugsweise die Schraublöcher 23 des Flanschrings 21 ab.

Der Dichtring 27 besteht vorzugsweise aus einem vollstückigen Elastomer, z. B. Gummi. Da sich der Dichtring 27 im Dichtungseingriff im allgemeinen elastisch deformiert und sich radial verkürzt und axial verlängert, ist der Nutring 29 vorzugsweise in axialer Richtung breiter als der Dichtungsring 27 im unbelasteten Zustand.

## Patentansprüche

1. Vorrichtung zum Bilden eines Langspalts (3) zwischen einer rotierenden Gegenwalze (2) und einer Schuhwalze (1) zum Behandeln einer Warenbahn, wobei die Schuhwalze (1) einen feststehenden Träger (4) und einen um den Träger (4) drehbaren, flexiblen Walzenmantel (5) aufweist, der im Langspalt (3) auf einem am Träger (4) angeordneten Druckschuh (9) abgestützt ist, der Walzenmanteil (5) Endabschnitte (20) aufweist, die an am Träger (4) drehbar gelagerten Randscheiben (6, 7) mittels jeweils eines Klemmrings festgeklemmt und über jeweils einen in eine Stirnwand (22) der Randscheibe (6) in einem Nutring (29) eingelegten Dichtring (27) abgedichtet sind, der Nutring (29) zur Bildung einer Auflage für eine der Endabschnitte (20) einen Rand (30) aufweist, die Klemmringe als radial anziehbare Flanschringe (21) ausgebildet sind, die jeweils auf einer Breite des Flanschrings (21) als mit Schraublöchern (23) versehener und an der Stirnwand (22) festgemachter Stützsteg (25) ausgebildet sind und auf einer anderen Breite des Flanschrings (21) mit einem Überhang (26) ausgebildet sind, und der Überhang (26) eine gegen den im Nutring (29) der Randscheibe (6) eingelegten Dichtring (27) klemmbare, umlaufende Nase (28) aufweist.

2. Vorrichtung nach Anspruch 1, **dadurch gekennzeichnet, daß** der Rand (30) des Nutrings (29) gegenüber der eine Anlagefläche für den Stützsteg (25) bildenden Stirnwand (22) einen radialen Aufsatz bildet.

3. Vorrichtung nach Anspruch 1 oder 2, **dadurch gekennzeichnet, daß** der Flanschring (21) einen plattenförmigen Rücken aufweist, von dem sich der Stützsteg (25) mit einem größeren radialen Fortsatz erstreckt als die Ringnase (28).

4. Vorrichtung nach einem der Ansprüche 1 bis 3, **dadurch gekennzeichnet, daß** zwischen dem Stützsteg (25) und der Ringnase (28) eine Tasche (31) zur freistehenden Aufnahme eines Walzenmantelendes (20) vorgesehen ist.

5. Vorrichtung nach einem der Ansprüche 1 bis 4, **dadurch gekennzeichnet, daß** die Flanschringe (21) Öffnungen (37) zum Einsetzen von Positionierstiften (34) für eine Befestigung des Walzenmantels (5) an den Randscheiben (6) aufweisen.

6. Vorrichtung nach Anspruch 5, **dadurch gekennzeichnet, daß** die Öffnungen ein Innengewinde (38) aufweisen.

7. Vorrichtung nach einem der Ansprüche 1 bis 6, **dadurch gekennzeichnet, daß** ein L-förmiger Sicherungsdeckel (35) aufsetzbar ist, der die Schraublöcher (23) abdeckt.

## Claims

1. Apparatus for forming an extended nip (3) between a rotating mating roll (2) and a shoe roll (1) for treating a material web, the shoe roll (1) having a stationary support (4) and a flexible roll shell (5) which can be rotated about the support (4) and is supported in the extended nip (3) on a pressure shoe (9) which is arranged on the support (4), the roll shell (5) having end sections (20) which are clamped fixedly by means of in each case one clamping ring to edge discs (6, 7), which are mounted rotatably on the support (4), and are sealed via in each case one sealing ring (27) which is inserted in a grooved ring (29) into an end wall (22) of the edge disc (6), the grooved ring (29) having an edge (30) for forming a support for one of the end sections (20), the clamping rings being configured as flange rings (21) which can be tightened radially, said flange rings being configured, in each case on a width of the flange ring (21), as a supporting web (25) which is provided with screw holes (23) and is fixed on the end wall (22), and being configured with an overhang (26) on another width of the flange ring (21), and the overhang (26) having a circumferential lug (28) which can be clamped against the sealing ring (27) which is inserted in the grooved ring (29) of the edge disc (6).

2. Apparatus according to Claim 1, **characterized in that** the edge (30) of the grooved ring (29) forms a radial attachment with respect to the end wall (22) which forms a stop face for the supporting web (25).

3. Apparatus according to Claim 1 or 2, **characterized in that** the flange ring (21) has a plate-shaped rear, from which the supporting web (25) extends with a greater radial projection than the annular lug (28).

4. Apparatus according to one of Claims 1 to 3, **characterized in that** a pocket (31) for receiving a roll-shell end (20) in a free-standing manner is provided between the supporting web (25) and the annular lug (28).

5. Apparatus according to one of Claims 1 to 4, **characterized in that** the flange rings (21) have openings (37) for the insertion of positioning pins (34) for fastening the roll shell (5) to the edge discs (6).

6. Apparatus according to Claim 5, **characterized in that** the openings have an internal thread (38).

7. Apparatus according to one of Claims 1 to 6, **characterized in that** an L-shaped securing cover (35) can be fitted which covers the screw holes (23).

## Revendications

1. Dispositif pour former un espace calibré (3) s'étendant en longueur entre un rouleau à sabot (1) et un rouleau de contre-pression rotatif (2) pour le traitement d'une bande de matériau, où ledit rouleau à sabot (1) comporte un support fixe (4) et un fourreau enveloppant (5) flexible et mobile en rotation autour dudit support (4), lequel fourreau enveloppant (5) est supporté, au niveau dudit espace calibré (3), par un sabot de pression (9) disposé sur ledit support (4), ledit fourreau enveloppant (5) comportant des flasques d'extrémité (20) qui sont serrés, chacun au moyen d'une bague de serrage, à des rondelles latérales (6, 7), montées pivotantes sur ledit support (4), et qu sont étanchéifiés chacun au moyen d'un joint d'étanchéité (27) inséré dans un anneau à gorge (29) dans une paroi frontale (22) de ladite rondelle latérale (6), ledit anneau à gorge (29) comportant une lèvre (30) pour former un appui pour un desdits flasques d'extrémité (20), lesdites bagues de serrage étant constituées de collets rapportés (21) insérables radialement, qui sont respectivement constitués, sur une première partie de la largeur dudit collet rapporté (21) par une entretoise d'appui (25) prévue avec des lamages d'appui de vis (23) et en appui ferme sur ladite paroi frontale (22), et sur une autre partie de la largeur dudit collet rapporté (21) par un saillant en porte-à-faux (26), ledit saillant (26) comportant un nez (28) de révolution calable contre ledit joint d'étanchéité (27) inséré dans ledit anneau à gorge (29) de ladite rondelle latérale (6).

2. Dispositif selon la revendication 1, **caractérisé en ce que** ladite lèvre (30) dudit anneau à gorge (29) forme une collerette radiale, en face de ladite paroi frontale (22) formant une surface de réception pour ladite entretoise d'appui (25).

3. Dispositif selon la revendication 1 ou 2, **caractérisé en ce que** ledit collet rapporté (21) comporte un dos de forme plate, duquel ladite entretoise d'appui (25) s'étend avec une protubérance radiale plus grande que ledit nez (28) de révolution.

4. Dispositif selon l'une des revendications 1 à 3, **caractérisé en ce qu'**une chambre (31) est prévue entre ladite entretoise d'appui (25) et ledit nez (28) de révolution, pour le logement flottant d'un dit flasque d'extrémité (20) dudit fourreau.

5. Dispositif selon l'une des revendications 1 à 4, **caractérisé en ce que** lesdits collets rapportés (21) comportent des ouvertures (37) pour le logement de goupilles de positionnement (34) pour la fixation dudit fourreau (5) sur lesdites rondelles latérales (6).

6. Dispositif selon la revendication 5, **caractérisé en ce que** lesdites ouvertures comportent un taraudage intérieur (38).

7. Dispositif selon l'une des revendications 1 à 6, **caractérisé en ce qu'**un couvercle de sécurité (35) à profil en L est positionnable pour couvrir les trous de vis (23).
